# EUROPÄISCHE PATENTANMELDUNG

(11) **EP 2 902 087 A1**
(43) Veröffentlichungstag der Anmeldung: **05.08.2015**
(21) Anmeldenummer: 14000397.1
(22) Anmeldetag: 04.02.2014
(51) Int. Cl.: B01D 53/04

(54) **Verfahren zur Abscheidung einer Komponente eines Gasgemischs unter Verwendung einer Temperaturwechseladsorption**

(71) Anmelder: Linde Aktiengesellschaft, 80331 München (DE)
(72) Erfinder: Schürer, Benedikt, 81369 München (DE); Duarte, Gabriel Salazar, 80336 München (DE)
(74) Vertreter: Zahn, Christoph

(57) **Zusammenfassung**

Die Erfindung betrifft ein Verfahren zur Abscheidung zumindest einer Komponente eines Rohgasstroms (5) mittels einer Temperaturwechseladsorption unter Verwendung zumindest dreier separater Adsorber (1, 2, 3, 4), die je ein Adsorbens aufweisen, wobei jeder Adsorber (1, 2, 3, 4) wiederholt einen eigenen Taktzyklus mit zumindest drei Takten durchläuft, wobei der jeweilige Adsorber (1, 2, 3, 4) in einem ersten Takt von einem Rohgasstrom (5) durchströmt wird, wobei die abzuscheidende Komponente vom jeweiligen Adsorbens adsorbiert wird und der gereinigte Rohgasstrom als Produktgasstrom (6) aus dem jeweiligen Adsorber (1, 2, 3, 4) ausgegeben wird, und wobei das Adsorbens des jeweiligen Adsorbers (1, 2, 3, 4) in einem auf den ersten Takt folgenden zweiten Takt zum Regenerieren des Adsorbens des jeweiligen Adsorbers (1, 2, 3, 4) geheizt wird, indem Wärme eines fluiden Wärmeträgermediums (W) auf das Adsorbens des jeweiligen Adsorbers (1, 2, 3, 4) indirekt übertragen wird, wobei jene Komponente desorbiert und als Restgasstrom (R) abgeführt wird, und wobei das Adsorbens des jeweiligen Adsorbers (1, 2, 3, 4) in einem auf den zweiten Takt folgenden dritten Takt gekühlt wird und ein vorbestimmter Druck in dem jeweiligen Adsorber (1, 2, 3, 4)) aufgebaut wird. Erfindungsgemäß ist vorgesehen, dass sich zumindest zu Beginn des ersten Taktes eines jeden Adsorbers (1, 2, 3, 4) zumindest ein weiterer Adsorber (1, 2, 3, 4) im ersten Takt befindet.

## Beschreibung

Die Erfindung betrifft ein Verfahren zur Abscheidung zumindest einer Komponente aus einem Gasgemisch unter Verwendung einer Temperaturwechseladsorption.

Die Erfindung basiert auf einem Temperaturwechseladsorptionsverfahren (TSA = Temperature Swing Adsorption). Dieses wird industriell bisher hauptsächlich zur Entfernung von Spurenkomponenten (weniger als 1 vol.-% des jeweiligen Rohgases) aus Gasgemischen verwendet. Für das Temperaturwechseladsorptionsverfahren werden in der Regel zwei mit adsorptiv aktivem Material (auch als Adsorbens bezeichnet) gefüllte Behälter (so genannte Adsorber) genutzt, die wechselweise betrieben werden. Während sich ein Behälter in Adsorption befindet, wird der andere Behälter mit heißem Regeneriergas durchströmt und das darin befindliche, beladene Adsorbens aufgeheizt. Die Adsorptionskapazität des Adsorbens sinkt mit steigender Temperatur, so dass es zur Desorption der adsorbierten Komponenten kommt. Die desorbierten Komponenten werden durch das Regeneriergas verdünnt und aus dem jeweiligen Adsorber gespült. Die Verwendung von Regeneriergas bewirkt zusätzlich eine Herabsetzung des Partialdrucks der adsorbierten Komponente in der Gasphase und begünstigt somit die Desorption der zurückgehaltenen Spurenkomponenten. Die Aufheizzeiten und Abkühlzeiten werden meist durch die zur Verfügung stehende beziehungsweise einsetzbare Menge an Regeneriergas begrenzt und liegen typischerweise im Bereich mehrerer Stunden (regelmäßig mehr als drei Stunden). Hieraus ergeben sich Zykluszeiten von meist deutlich mehr als sechs Stunden.

Wird der Adsorber nicht direkt durch Regeneriergas sondern indirekt durch ein fluides Wärmeträgermedium geheizt und ggf. auch gekühlt, welches nicht in direktem Kontakt mit dem Adsorbens steht, sondern räumlich getrennt davon geführt wird, so sind deutlich kürzere Zykluszeiten (z.B. weniger als vier Stunden) möglich. Man spricht deshalb auch von einem sogenannten Rapid-Temperaturwechseladsorptionsverfahren (RTSA für Rapid Temperatur Swing Adsorption). Ein entsprechender Apparat kann zum Beispiel wie ein Rohrbündelwärmeübertrager mit Adsorbens in den Rohren und einem Wärmeträgerfluid (zum Beispiel Wasser, Dampf oder Thermoöl) auf der Mantelseite aufgebaut sein. Andere Anordnungen, zum Beispiel Adsorbens auf der Mantelseite oder rechteckige Kanäle, sind jedoch auch möglich. Im Vergleich zu einem herkömmlichen TSA-Verfahren mit direkter Wärmeübertragung auf das Adsorbens mittels eines heißen Regeneriergases ergeben sich weitere Vorteile für einen indirekt beheizten und ggf. gekühlten Adsorber. So ist es möglich, auch höhere Konzentrationen einer Komponente aus einem Gasgemisch bzw. Rohgas zu entfernen. Es wird kein beziehungsweise deutlich weniger Regeneriergas benötigt und die zurückgehaltene Komponente kann in einer hohen Konzentration zurückgewonnen werden. Im Vergleich zu alternativen Trennverfahren wie Wäschen und Druckwechseladsorption kann die zurückgehaltene Komponente auch auf hohem Druck zurückgewonnen werden.

In der EP 1 291 067 A2 wird ein Rapid-TSA-Verfahren mit indirekter Beheizung und Kühlung vorgestellt. Es wird außerdem eine Variante bestehend aus drei Adsorbern beschrieben. Das Thermofluid, welches zum Heizen und Kühlen verwendet wird, kann dabei jeweils im Kreislauf gefahren werden.

In der EP 2 654 925 A1 wird ein Rapid-TSA-Verfahren mit indirekter Beheizung und Kühlung zur Reinigung von methanreichem Gas (zum Beispiel Biogas) beschrieben. Die Adsorber sind hierbei wie Rohrbündelwärmeübertrager aufgebaut, wobei sich das Adsorbens in den Rohren und ein Thermofluid auf der Mantelseite befindet. Für das Verfahren werden zwei Adsorber verwendet, die sich wechselseitig in Adsorption befinden. Das Verfahren zeichnet sich dadurch aus, dass mindestens zwei Speichertanks für das Thermofluid bei unterschiedlichen Temperaturen vorhanden sind um eine Wärmespeicherung und Wärmerückgewinnung zu ermöglichen.

In der US 7,744,677 B2 wird ein Rapid-TSA-Verfahren mit indirekter Beheizung und Kühlung beschrieben, das drei Adsorber verwendet. Hierbei wird stets ein Adsorber zur Adsorption verwendet, während die anderen beiden Adsorber geheizt beziehungsweise gekühlt werden. Das zum Heizen und Kühlen verwendete Thermofluid wird hierbei zum Austausch von Wärme zwischen den beiden in Regeneration befindlichen Adsorbern verwendet. Es ist somit möglich, die beim Kühlen abgeführte Wärme direkt zum Aufwärmen des zu heizenden Adsorbers zu verwenden. Die bisher beschriebenen Rapid-TSA-Verfahren können, im Gegensatz zum oben dargelegten herkömmlichen TSA-Verfahren, zur Entfernung von höheren Konzentrationen an Verunreinigungen (mehr als 5 vol.-%) eingesetzt werden. Zwar müssen hierbei für die Regeneration neben dem Adsorbens zum Teil auch beträchtliche Mengen an inertem Material (zum Beispiel Rohre zur Trennung von Adsorbens und Thermofluid) aufgewärmt und gekühlt werden. Durch Wärmeintegration ist es jedoch möglich, einen Großteil der zugeführten Energie zurückzugewinnen und somit auch energetisch zu alternativen Trennverfahren, wie zum Beispiel Gaswäschen (zum Beispiel Aminwäsche, Rectisolwäsche) konkurrenzfähig zu sein.

Besonders bei der Anwendung von Rapid-TSA-Anlagen zur Entfernung von Komponenten im Bereich von mehreren Volumenprozenten aus einem Gasgemisch bzw. Rohgas weist der Produktstrom aufgrund der diskontinuierlichen Fahrweise zum Teil erheblich Volumenstromschwankungen, Temperaturschwankungen und Konzentrationsschwankungen auf. Nach der Regeneration ist das Adsorbens in der Regel nur geringfügig beladen. Zu Beginn des Adsorptionsschritts werden neben den zu entfernenden Komponenten zunächst auch andere (Haupt-) Komponenten aus dem Gasstrom zurückgehalten und es kommt somit zu Konzentrationsschwankungen, Temperaturschwankungen und Volumenstromschwankungen. Diese sind in der Regel unerwünscht, da sie nachfolgende Prozessschritte (zum Beispiel die kryogene Verflüssigung) stören.

Die vorliegend geschilderten Nachteile aus dem bekannten Stand der Technik werden mit der im Folgenden beschriebenen Erfindung zumindest teilweise gelöst. Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die erfindungsgemäße Aufgabe wird dadurch gelöst, dass ein Verfahren zur Abscheidung einer Komponente eines Rohgases bzw. Gasgemisches unter Anwendung einer Rapid-Temperaturwechsel-Adsorption vorgeschlagen wird. Erfindungsgemäß ist dabei nach Anspruch 1 vorgesehen, dass sich zumindest zu Beginn des ersten Taktes eines jeden Adsorbers zumindest ein weiterer Adsorber im ersten Takt befindet.

Mit dem hier vorgeschlagenen Verfahren können eine Mehrzahl von Gaskomponenten, beispielsweise CO₂ und H₂O (sowie insbesondere auch H₂S und eine C₆₊-Fraktion, d.h. Stoffe wie Kohlenwasserstoffe mit 6 oder mehr Kohlenstoffatomen), aus einem Rohgas (z.B. einem Synthesegas) bzw. einem Gasgemisch (z.B. auch Erdgas oder Luft) abgeschieden werden. Hier wird eine indirekte Erwärmung beziehungsweise Kühlung des Adorbens des jeweiligen Adsorbers durchgeführt, wodurch die Zykluszeiten deutlich verkürzt werden (z.B. weniger als vier Stunden) und die Menge an abgeschiedenen Gaskomponenten im Prozentbereich liegen können, bevorzugt bis zu 10 Vol.% oder sogar bis zu 20 Vol.-%. Mit diesen Abscheidungsraten ist dieses Verfahren gegenüber den bekannten Gaswäschen oder Druckwechseladsorptionsverfahren konkurrenzfähig, allerdings können die Eigenschaften des Produktgasstroms deutlich schwanken (siehe oben). Erfindungsgemäß wird diesbezüglich vorgeschlagen, diesem Effekt zu begegnen, indem dem Produktgasstrom, der von einem Adsorber abgegeben wird, zumindest zu Beginn der Produktgasabgabe ein Produktgas eines weiteren, im ersten Takt befindlichen Adsorbers beizumischen, um die Eigenschaften des resultierenden Produktgasstromes hinsichtlich Volumenstrom-, Temperatur, und Konzentration zu vergleichmäßigen. Ganz besonders bevorzugt ist der Produktgasstrom dabei über die Durchführung der Takte und deren Wiederholung zumindest nach einer ersten Anfahrzeit, bei der unter Umständen noch kein Produktgas vorliegt bzw. eine andere Fahrweise der Adsorber durchgeführt wird, (nahezu) konstant.

Erfindungsgemäß werden also zumindest drei Adsorber verwendet, wobei zumindest zu Beginn der Adsorption (erster Takt) eines Adsorbers ein weiterer Adsorber in Adsorption (erster Takt) gefahren wird und die beiden Produktgasströme im Bereich der Überlappung der beiden Takte kontrolliert gemischt werden.

Die erfindungsgemäße Lösung nutzt daher insbesondere den Umstand aus, dass das Produktgas sich zu einem anderen Zeitpunkt in einem anderen Zustand befindet, welcher dem gewünschten Zustand ggf. mehr entspricht. Durch die Vermischung dieser Produktgasströme wird also die Konzentration und/oder Temperatur gemittelt. Darüber hinaus ist auch der Volumenstrom über die Ausführung des Verfahrens und seiner Wiederholung ausgleichbar. Durch eine geschickte zeitlich überlappende Ausführung der einzelnen Takte entstehen dabei insbesondere keine Einschränkungen bei der Produktgasgewinnung.

Gemäß einer weiteren bevorzugten Ausführungsform wird der erste Takt, d.h. die Adsorption, über seine gesamte Dauer zur gleichen Zeit in mindestens zwei Adsorbern durchgeführt.

Je mehr Adsorber verwendet werden, desto gleichmäßiger kann die Produktgasabgabe gestaltet werden. Bei beispielsweise sieben parallel geschalteten Adsorbern können sich drei Adsorber zumindest zeitweilig gleichzeitig in ihrem jeweiligen ersten Takt befinden (also adsorbieren), wobei bevorzugt der resultierende Produktgasstrom stets ein Gemisch aus Produktgasströmen von drei Adsorbern in wechselnder Konstellation ist.

Besonders bevorzugt wird Wärme, die beim Kühlen im dritten Takt dem Adsorbens eines Adsorbers entzogen wird, dem Adsorbens eines anderen, sich zur gleichen Zeit im zweiten Takt befindliche Adsorbers zugeführt, wobei vorzugsweise die beim besagten Kühlen entzogene Wärme indirekt auf das Wärmeträgermedium übertragen wird und vom Wärmeträgermedium indirekt auf das Adsorbens des im zweiten Takt befindlichen Adsorbers übertragen wird. Das Wärmeträgermedium kann dabei in einem Kreislauf gefahren werden. Bei dieser vorteilhaften Ausführungsform wird also insbesondere die Abwärme eines ersten Adsorbers ohne Zwischenspeicherung für die Erwärmung des Adsorbens eines weiteren Adsorbers verwendet. Damit ist die Wirtschaftlichkeit deutlich angehoben, weil zum einen die Menge an zusätzlich zuzuführender Wärmeenergie reduziert werden kann und zum anderen eine Wärmespeicheranlage nicht notwendig ist.

Gemäß einer weiteren Ausführungsform der Erfindung ist vorgesehen, dass ein Teilstrom des Produktgasstroms der des zu reinigenden Rohgasstromes, bevorzugt kontinuierlich, abgezogen wird und zum Spülen des Adsorbens eines im zweiten Takt befindlichen Adsorbers und/oder zum Druckaufbau eines im dritten Takt befindlichen Adsorbers verwendet wird, wobei insbesondere der Druck durchgängig während des gesamten dritten Taktes aufgebaut werden kann.

Gemäß einer weiteren Ausgestaltung der Erfindung ist bevorzugt vorgesehen, dass ein Teilstrom des Produktgasstroms, bevorzugt kontinuierlich, abgezogen und zwischengespeichert wird, wobei das eingespeicherte Produktgas dem Produktgasstrom zum Ausgleichen von Schwankungen des Produktgasstromes bei Bedarf zugemischt werden kann.

Durch die Zwischenspeicherung von Produktgas kann insbesondere beim ersten Anfahren der Anlage ein direkt nutzbarer Produktgasstrom gemäß der gewünschten Qualität abgezogen werden. Aber auch während des Verfahrens kann während eines Mittelzeitabschnitts mehr oder weniger kontinuierlich Produktgas eingespeichert werden und bei einer Schwankung beim Beginn und Ende eines Abziehens von Produktgas das eingespeicherte Produktgas ausgespeichert werden, um so z.B. einen Volumenstrom konstant zu halten. Darüber hinaus kann durch eine geeignete Einspeicherung die Konzentration und/oder Temperatur des Produktgases über die gesamte Dauer (nahezu) konstant gehalten werden.

Mit dem hier vorgeschlagenen Verfahren ist es möglich, einen Produktgasstrom mit gleichmäßigen Eigenschaften bezogen auf die Konzentration, die Temperatur und den Volumenstrom zu erhalten.

Die oben beschriebene Erfindung wird nachfolgend vor dem betreffenden technischen Hintergrund unter Bezugnahme auf die zugehörigen Zeichnungen, die bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: eine Temperaturwechseladsorptionsanlage die zur Durchführung des erfindungsgemäßen Verfahrens ausgebildet ist;
- Fig. 2:: ein erstes konventionelles Temperaturwechseladsorptionsverfahren;
- Fig. 3:: ein zweites konventionelles Temperaturwechseladsorptionsverfahren;
- Fig. 4:: eine erste Ausführungsform des erfindungsgemäßen Temperaturwechseladsorptionsverfahrens;
- Fig. 5:: eine zweite Ausführungsform des erfindungsgemäßen Temperaturwechseladsorptionsverfahrens;
- Fig. 6:: eine dritte Ausführungsform des erfindungsgemäßen Temperaturwechseladsorptionsverfahrens;
- Fig. 7:: eine vierte Ausführungsform des erfindungsgemäßen Temperaturwechseladsorptionsverfahrens; und
- Fig. 8:: eine fünfte Ausführungsform des erfindungsgemäßen TemperaturwechselAdsorptionsverfahrens.

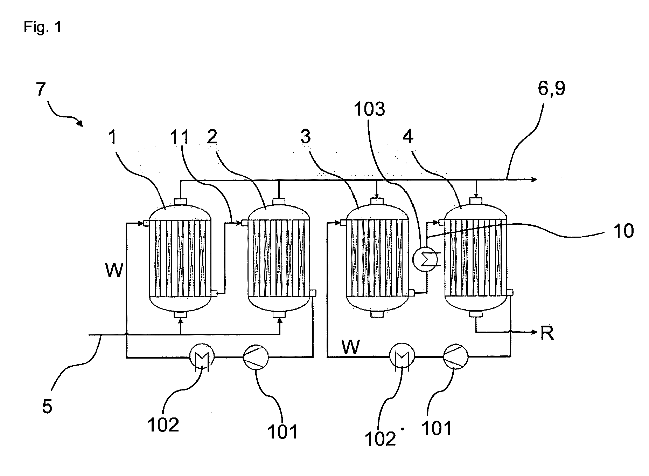

In Fig. 1 wird eine erfindungsgemäße Temperaturwechseladsorptionsanlage 7 schematisch gezeigt, die einen ersten Adsorber 1, einen zweiten Adsorber 2, einen dritten Adsorber 3 und einen vierten Adsorber 4 aufweist, die in Bezug auf einen per Temperaturwechseladsorption zu reinigenden und in die Adsorber 1, 2, 3, 4 einströmenden Rohgasstrom 5 und den jeweils aus den Adsorbern 1, 2, 3, 4 abzuziehenden Produktgasstrom 6 parallel geschaltet sind. Gemäß Figur1 befinden sich der erste Adsorber 1 und der zweite Adsorber 2 gerade im ersten Takt, bei dem ein Rohgasstrom 5 den ersten sowie den zweiten Adorber 1, 2 durchströmt und die abzuscheidende Komponente des Rohgasstromes 5 (z.B. CO₂ und/oder H₂O) am Adsorbens des jeweiligen Adsorbers 1, 2 adsorbiert wird.

Der dritte Adsorber 3 wird gerade im dritten Takt gekühlt und der Druck im dritten Adsorber 3 wird wieder aufgebaut, indem Produktgas in den dritten Adsorber 3 gegeben wird. Der vierte Adsorber 4 befindet sich gerade im zweiten Takt und wird zum Regenieren geheizt und mit Produktgas 6 gespült das als Restgas R aus dem vierten Adsorber 4 abgezogen wird. Zum Heizen ist ein Kreislauf 10 vorhanden, in dem ein fluides Wärmeträgermedium W mittels eine Pumpe 101 im Kreislauf geführt wird, das indirekt Wärme des Adsorbens des im dritten Takt befindlichen dritten Adsorbers 3 aufnimmt und indirekt auf das Adsorbens des vierten Adsorbers überträgt, der sich gerade im zweiten Takt befindet. Das Wärmetrtägermedium W kann dabei stromauf des dritten Adsorbers 3 mittels eines Wärmeübertragers 102 gekühlt werden und stromab des dritten Adsorbers 3 sowie stromauf des vierten Adsorbers 4 mittels eines Wärmeübertragers 103 erwärmt werden. Ein analoger Kreislauf 11 ist für den ersten und den zweiten Adsorber 1, 2 vorgesehen. Bei einer entsprechenden Verschaltung können immer die gleichen Wärmeübertrager verwendet werden. Hierfür können entsprechende Ventile und Rohrleitungen vorgesehen werden.Der aus den Adsorbern 1, 2, 3, 4 jeweils abgezogene Produktgasstrom 6 wird in einer gemeinsamen Produktgasleitung 9 gemischt. Figur 1 zeigt die momentane Mischung von Produktgasströmen aus dem ersten und dem zweiten Adsorber.

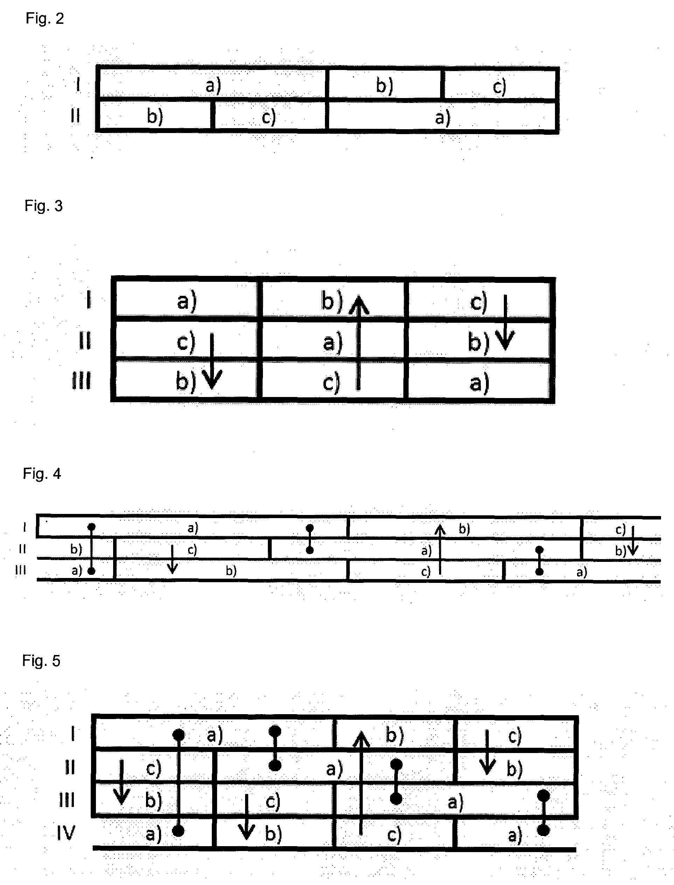

Im Folgenden wird der erste Takt in den Figuren 2 bis 8 mit a), der zweite Takt mit b) und der dritte Takt mit c) bezeichnet.

In Fig. 2 wird ein konventionelles Verfahren in vereinfachter Darstellung gezeigt, bei dem durch einen Adsorber I und einen dazu parallel geschalteten Adsorber II lediglich für eine durchgehende Adsorption (erster Takt a)) mit konstanter Rohgasbeaufschlagung gesorgt ist. Hierbei kommt es in der Regel vor allem zu Beginn des Adsorptionstaktes zu starken Volumenstrom- und Konzentrationsschwankungen im Produktstrom.

In Fig. 3 wird ein weiteres konventionelles Verfahren in vereinfachter Darstellung gezeigt, wobei hier die drei Adsorber I bis III so geschaltet sind, dass die Abwärme beim Kühlen (dritter Takt c)) direkt zum Heizen (zweiter Takt b)) eines anderen Adsorbers verwendet werden kann. Dies ist durch einen Pfeil angedeutet.

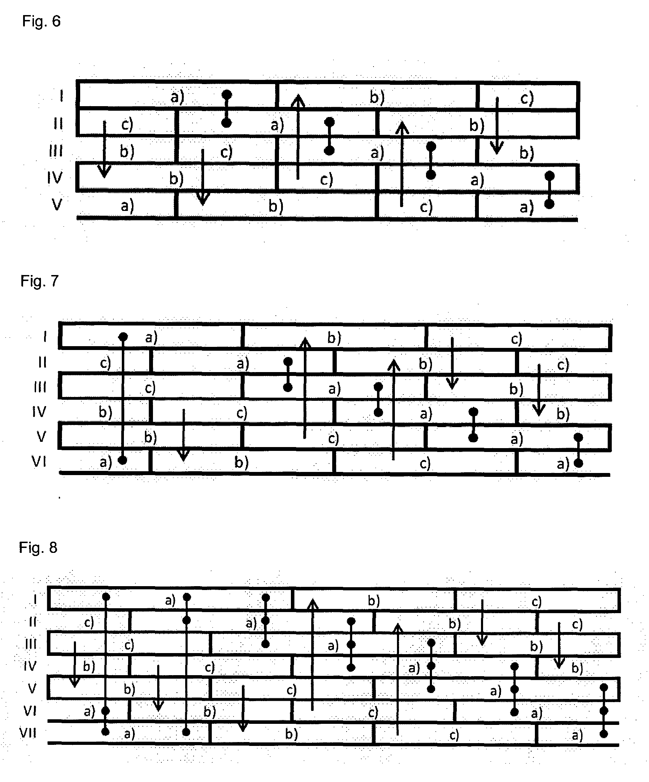

In den Figuren 4 bis 8 sind Varianten des oben beschriebenen Verfahrens in vereinfachter Darstellung gezeigt. Hierbei sind stets mindestens zwei der Adsorber I bis maximal VII (vergleiche Fig. 8) so eingerichtet, dass zumindest zu Beginn eines ersten Taktes a) ein weiterer Adsorber (noch) den ersten Takt a) ausführt. Die Produktgasströme werden gemischt, was durch die Punktpfeile angedeutet ist. Zum Beispiel wird der Adsorber III in Fig. 4 im ersten Takt a) betrieben (ganz rechts), während der Adsorber II hoch den ersten Takt a) ausführt und die entsprechenden Produktgasströme werden gemischt. Ebenso wird bei einer Wiederholung der dargestellten Sequenz der Adsorber I wieder in den ersten Takt a) versetzt, während der Adsorber III noch den ersten Takt a) ausführt und diese Produktströme werden ebenso gemischt. In Fig. 4 führt über den jeweiligen Mittelabschnitt des ersten Taktes a) kein zweiter Adsorber den ersten Takt a) aus. In den Figuren 5 bis 7 hingegen führen zu jedem beliebigen Zeitpunkt zwei Adsorber den ersten Takt a) aus, wobei mit der zunehmenden Anzahl an Adsorbern die Überlappung des dritten Taktes und des zweiten Taktes b) verbessert wird. In Fig. 8 wird in jeweils drei Adsorbern zur gleichen Zeit der erste Takt a) ausgeführt, wodurch sich die gewünschte Eigenschaft des resultierenden Produktgasstromes, der aus den entsprechenden im ersten Takt befindlichen Adsorbern abgezogenen und definiert zusammengemischt wird, hinsichtlich Volumenstrom, Konzentration und/oder Temperatur besonders gut einstellen lässt.

**Bezugszeichenliste**

| | |
|---|---|
| 1 | erster Adsorber |
| 2 | zweiter Adsorber |
| 3 | dritter Adsorber |
| 4 | vierter Adsorber |
| 5 | Rohgasstrom |
| 6 | Produktgasstrom |
| 7 | Temperaturwechseladsorptionsanlage |
| 9 | Produktgasleitung |
| 10, 11 | Kreislauf für Wärmeträgermedium |
| 101 | Pumpe |
| 102, 103 | Wärmeübertrager |
| W | Wärmeträgermedium |
| R | Restgasstrom |

## Patentansprüche

1. Verfahren zur Abscheidung zumindest einer Komponente eines Rohgasstroms (5) mittels einer Temperaturwechseladsorption unter Verwendung zumindest dreier separater Adsorber (1, 2, 3, 4), die je ein Adsorbens aufweisen, wobei jeder Adsorber (1, 2, 3, 4) wiederholt einen eigenen Taktzyklus mit zumindest drei Takten durchläuft, wobei der jeweilige Adsorber (1, 2, 3, 4) in einem ersten Takt von einem Rohgasstrom (51, 52) durchströmt wird, wobei die abzuscheidende Komponente vom jeweiligen Adsorbens adsorbiert wird und der von jener Komponente gereinigte Rohgasstrom als Produktgasstrom (6) aus dem jeweiligen Adsorber (1, 2, 3, 4) ausgegeben wird, und wobei das Adsorbens des jeweiligen Adsorbers (1, 2, 3, 4) in einem auf den ersten Takt folgenden zweiten Takt zum Regenerieren des Adsorbens des jeweiligen Adsorbers (1, 2, 3, 4) geheizt wird, indem Wärme eines fluiden Wärmeträgermediums (W) auf das Adsorbens des jeweiligen Adsorbers (1, 2, 3, 4) indirekt übertragen wird, wobei jene Komponente desorbiert und als Restgasstrom (6) abgeführt wird, und wobei das Adsorbens des jeweiligen Adsorbers (1, 2, 3, 4) in einem auf den zweiten Takt folgenden dritten Takt gekühlt wird und ein vorbestimmter Druck in dem jeweiligen Adsorber (1, 2, 3, 4) aufgebaut wird, **dadurch gekennzeichnet, dass** sich zumindest zu Beginn des ersten Taktes eines jeden Adsorbers (1, 2, 3, 4) zumindest ein weiterer Adsorber (1, 2, 3, 4) im ersten Takt befindet.

2. Verfahren nach Anspruch 1, **dadurch gekennzeichnet, dass** zumindest vier separate Adsorber (1, 2, 3, 4) verwendet werden, wobei jeder Adsorber (1, 2, 3, 4) wiederholt einen eigenen Taktzyklus mit den besagten mindestens drei Takten durchläuft, und wobei sich je zwei Adsorber (1, 2) gleichzeitig über die gesamte Zeitdauer ihres jeweiligen ersten Taktes in ihrem ersten Takt befinden.

3. Verfahren nach Anspruch 1 oder 2, **dadurch gekennzeichnet, dass** die Produktgasströme (6) der gleichzeitig im ersten Takt befindlichen Adsorber (1, 2) gemischt werden, insbesondere um Schwankungen im resultierenden Produktgasstrom (6) zu minimieren.

4. Verfahren nach einem der vorangehenden Ansprüche, **dadurch gekennzeichnet, dass** Wärme, die beim Kühlen im dritten Takt dem Adsorbens eines Adsorbers (3) entzogen wird, dem Adsorbens eines anderen, sich zur gleichen Zeit im zweiten Takt befindliche Adsorbers (4) zugeführt wird, wobei insbesondere die beim besagten Kühlen entzogene Wärme indirekt auf das Wärmeträgermedium (W) übertragen wird und vom Wärmeträgermedium (W) indirekt auf das Adsorbens des im zweiten Takt befindlichen Adsorbers (4) übertragen wird.

5. Verfahren nach einem der vorangehenden Ansprüche, **dadurch gekennzeichnet, dass** ein Teilstrom des Produktgasstroms (6) oder des Rohgasstromes (5), bevorzugt kontinuierlich, abgezogen wird und zum Spülen eines im zweiten Takt befindlichen Adsorbers (4) und/oder zum Druckaufbau eines im dritten Takt befindlichen Adsorbers (3) verwendet wird, wobei insbesondere der Druck durchgängig während des gesamten dritten Taktes aufgebaut wird.

6. Verfahren nach einem der vorangehenden Ansprüche, **dadurch gekennzeichnet, dass** ein Teilstrom des Produktgasstroms (6), bevorzugt kontinuierlich, abgezogen und zwischengespeichert wird, wobei das eingespeicherte Produktgas dem Produktgasstrom (6) zum Ausgleichen von Schwankungen des Produktgasstromes (6) zugemischt wird.
